# EUROPÄISCHE PATENTANMELDUNG

(11) **EP 1 744 421 A1**
(43) Veröffentlichungstag der Anmeldung: **17.01.2007**
(21) Anmeldenummer: 06014182.7
(22) Anmeldetag: 07.07.2006
(51) Int. Cl.: H02B 1/30

(54) **Vorrichtung zum Befestigen und Verriegeln einer Verschlussplatte für eine Gehäuseöffnung**

(30) Priorität: 11.07.2005 DE 102005032894
(71) Anmelder: Hager Electro GmbH, 66131 Saarbrücken (DE)
(72) Erfinder: Noll, Jürgen, 66440 Blieskastel (DE); Dissel, Klaus, 66131 Saarbrücken-Ensheim (DE); Leyendecker, Alexander, 66386 St. Ingbert (DE)
(74) Vertreter: Bernhardt, Reinold

(57) **Zusammenfassung**

Die Erfindung betrifft eine Vorrichtung zum Befestigen und Verriegeln einer Verschlussplatte für eine Gehäuseöffnung, insbesondere für eine Öffnung in der Wand eines Zähler- oder/und Verteilerschranks, mit zur Betätigung ausschließlich von der Gehäuseinnenseite her zugänglichen Befestigungs- und Verriegelungselementen. Gemäß der Erfindung umfassen die Befestigungs- und Verriegelungselemente wenigstens ein von der Verschlussplatte (1) in das Gehäuseinnere hinein vorstehendes Rastelement (5-7;8a,8a') zum Einrasten an einem mit dem Gehäuse verbundenen Gegenelement, wobei in der Verschlussposition der Verschlussplatte (1) das Rastelement (5-7;8a,8a') oder/und das Gegenelement in die Einraststellung hinein elastisch abbiegbar ist/sind.

## Beschreibung

Die Erfindung betrifft eine Vorrichtung zum Befestigen und Verriegeln einer Verschlussplatte für eine Gehäuseöffnung, insbesondere eine Öffnung in der Wand eines Zähler- oder/und Verteilerschranks, mit Befestigungs- und Verriegelungselementen, die zur Betätigung ausschließlich von der Gehäuseinnenseite her zugänglich sind.

Durch Benutzung sind solche Vorrichtungen zum Befestigen und Verriegeln von Verschlussplatten für Öffnungen in Wänden von Zähler- und/oder Verteilerschränken bekannt. Die Befestigung und Verriegelung der Verschlussplatte kann nur bei geöffnetem Verteilerschrank mit Hilfe eines Werkzeugs, z. B. eines Schrauberdrehers, erfolgen. Die Platte kann also nur durch Personen befestigt und verriegelt werden, die zur Schranköffnung befugt sind. Unbefugte können nicht unbemerkt dadurch Zugang zum Schrankinneren erlangen, dass sie die Verschlussplatte zerstören und später durch eine neue Verschlussplatte ersetzen.

Der Erfindung liegt die Aufgabe zugrunde, eine Verschlussvorrichtung der eingangs erwähnten Art zu schaffen, die einen geringeren Aufwand für die Montage und Demontage der Verschlussplatte als die bekannten derartigen Verschlussvorrichtungen erfordern.

Diese Aufgabe wird durch eine Verschlussvorrichtung gelöst, deren Befestigungs- und Verriegelungselemente wenigstens ein von der Platte in das Gehäuseinnere hinein vorstehendes Rastelement zum Einrasten an einem mit dem Gehäuse verbundenen Gegenelement umfassen, wobei in der Verschlussposition der Platte das Rastelement oder/und das Gegenelement elastisch in die Einraststellung hinein abbiegbar ist/sind.

Vorteilhaft können die Befestigung und sichere Verriegelung der Verschlussplatte von der Gehäuseinnenseite her bequem durch einen einzigen Handgriff unter Ausübung einer Kraft auf das Rastelement oder/und Gegenelement erfolgen.

Die Rastgeometrie kann im Hinblick auf eine hohe Verschlusssicherheit so gewählt sein, dass die Kraft, die auf das Rastelement bzw. Gegenelement auszuüben ist, um es in die Einrastposition zu bringen, ein mehrfaches der elastischen Rückstellkraft des Rastelements bzw. Gegenelements beträgt.

Das Rastelement kann z. B. platten- oder streifenförmig mit einer hakenförmigen Rastnase an dem der Verschlussplatte abgewandten Ende ausgebildet sein, so dass es bei der Einrastung auf Zug beansprucht wird.

In einer weiteren Ausführungsform der Erfindung ist eine einrastende Nase des Rastelements an einem sich parallel zur Platte erstreckenden Schenkel des Rastelements gebildet. Insbesondere kann dieser Schenkel relativ zum übrigen Rastelement senkrecht zur Plattenebene elastisch verbiegbar sein. Vorzugsweise ist der Schenkel Bestandteil eines das Rastelement bildenden Bügels, dessen beide Enden mit der Verschlussplatte verbunden sind. Vorteilhaft lässt sich die zur Herstellung der Rastverbindung erforderliche Kraft durch eine solche Konstruktion auf einen gewünschten, von Fertigungstoleranzen weitgehend unabhängigen Wert einstellen.

In weiterer Ausgestaltung der Erfindung können weitere, bei Anordnung der Verschlussplatte in der vorgesehenen Verschlussposition selbsttätig einrastende Rastelemente vorgesehen sein. Vorteilhaft erleichtern solche Rastelemente die Montage. Die Verschlussplatte kann in der Verschlussposition schon vor der endgültigen Verriegelung festgehalten werden. Z. B. kann an einer Seite der Platte ein selbsttätig einrastendes Rastelement und den drei übrigen Seiten ein durch Verbiegen einzurastendes Rastelement vorgesehen sein.

Alternativ können zusätzlich zum Rastelement den Rand der Gehäuseöffnung übergreifende Hakenelemente gebildet sein, welche auf der dem Rastelement gegenüberliegenden Plattenseite angeordnet sind. Bei der Montage wird die auf die Öffnung aufgesetzte Platte zunächst seitlich verschoben, um die Hakenelemente in Eingriff mit der Gehäusewand zu bringen. Abschließend erfolgt die Verriegelung durch Betätigung des Rastelements.

Die Erfindung soll nachfolgend anhand von Ausführungsbeispielen und der beiliegenden, sich auf diese Ausführungsbeispiele beziehenden Zeichnungen näher erläutert werden. Es zeigen:
- Fig. 1: eine Kabeldurchführungen aufweisende Verschlussplatte mit Befestigungs- und Verriegelungseinrichtungen nach der Erfindung,
- Fig. 2: die Verschlussplatte von Fig. 1 in einer Schnittdarstellung in montiertem Zustand,
- Fig. 3: eine die Funktion der Verschlussvorrichtung nach der Erfindung erläuternde Darstellung, und
- Fig. 4: einen Verschlussdeckel mit Befestigungs- und Verriegelungsvorrichtungen gemäß einem zweiten Ausführungsbeispiels für die Erfindung.

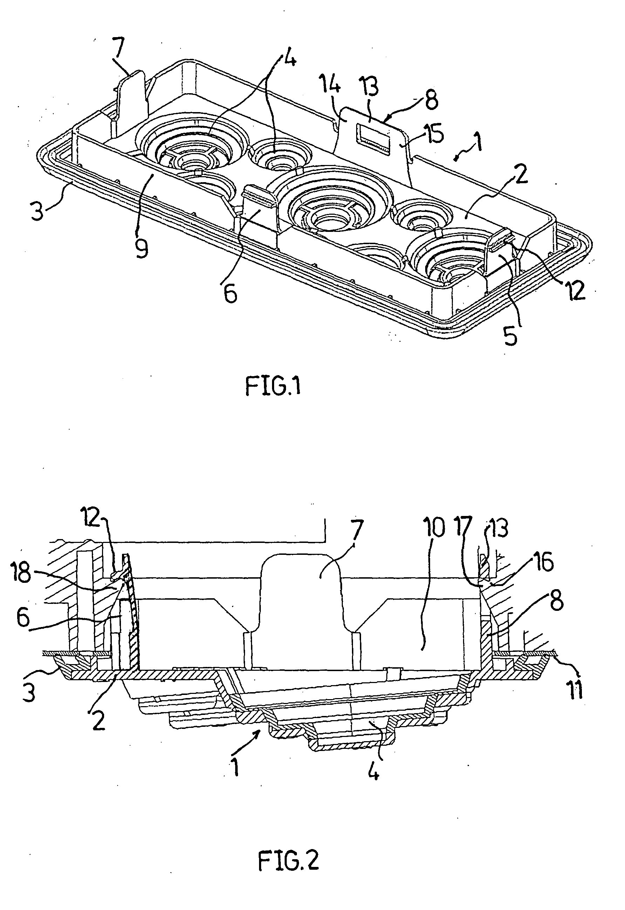

Eine in Fig. 1 und 2 gezeigte Verschlussplatte 1 weist einen Plattenteil 2 auf, an dessen Rand eine Dichtung 3 umläuft. In den Plattenteil 2 ist eine Vielzahl von Auswölbungen 4 zur Bildung von Durchführungsöffnungen für Kabel eingeformt. Die Verschlussplatte 1 dient zur Abdeckung einer Öffnung 10 an der Unterseite eines Zählerschranks 11.

Von dem aus Kunststoff bestehenden Plattenteil 2 stehen einstückig mit dem Plattenteil verbundene Rastelemente 5 bis 8 vor, wobei jeder Seite der Verschlussplatte jeweils ein solches Rastelement zugeordnet ist.

Mit dem Plattenteil 2 einstückig verbunden ist ferner ein nahe dem Rand des Plattenteils umlaufender Steg 9, welcher bei den Rastelementen 5 bis 8 jeweils unterbrochen ist. Der umlaufende Steg 9 bildet einen kastenartig vorstehenden Teil der Verschlussplatte, dessen Querschnittsabmessungen etwas geringer als die Abmessungen der zu verschließenden Öffnung 10 an der Unterseite des Zählerschranks 11 sind.

Wie insbesondere Fig. 1 erkennen lässt, sind die Rastelemente 5 bis 7 plattenartig mit einer im Querschnitt hakenförmigen Rastleiste 12 nahe dem freien, dem Plattenteil abgewandten Ende ausgebildet. Das Rastelement 8 ist dagegen bügelförmig und weist einen zum Plattenteil 2 parallelen Schenkel 13 sowie dazu senkrechte Schenkel 14 und 15 auf. An den Schenkel 13 ist ein kleiner Rastvorsprung 16 angeformt.

Zum Montieren der Verschlussplatte 1 an dem Zählerschrank 11 wird die Verschlussplatte 1 mit dem umlaufenden Steg 9 voran in die Öffnungen 10 an der Unterseite des Zählerschranks 11 eingesetzt. Der Steg 9 bildet eine Führung, die eine seitliche Verschiebung der Verschlussplatte 1 während der Einführung verhindert.

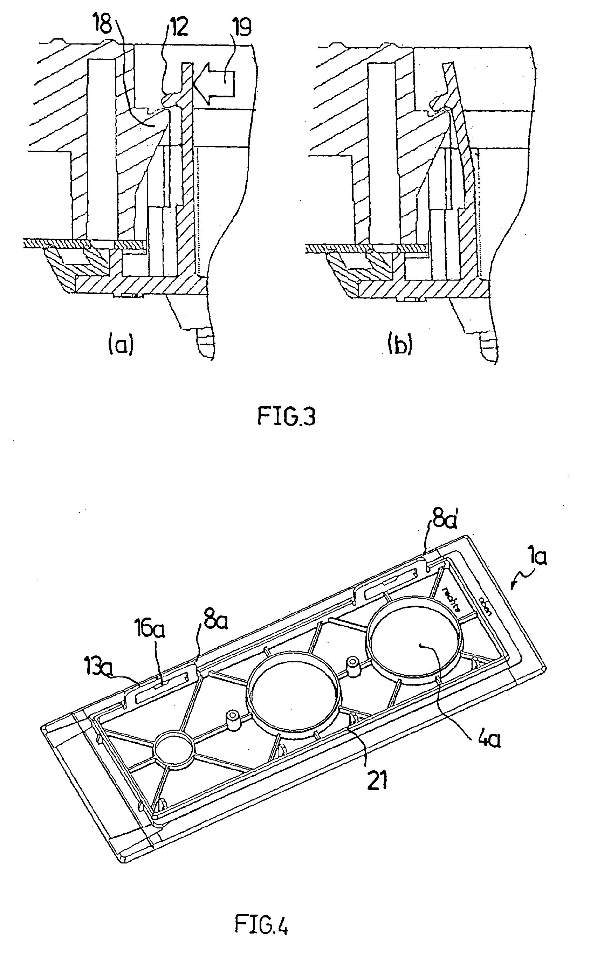

Beim Einsetzen der Verschlussplatte 1 in die Öffnung 10 rastet das Element 8 automatisch an einer mit dem Zählerschrank 11 verbundenen Rastnase 17 ein. Die Rastelemente 5 bis 7 nehmen dagegen zunächst die in Fig. 3a gezeigte Stellung ein.

Um die Verschlussplatte 1 an dem Zählerschrank 11 zu befestigen und zu verriegeln, müssen die Rastelemente 5 bis 7 durch Krafteinwirkung gemäß Pfeil 19 in die in Fig. 2 und 3b gezeigte Raststellung gedrückt werden, in welcher sie an einer am Zählerschrank 11 gebildete Rastnase 18 einrasten. Die Rückstellkraft der elastisch abgebogenen Rastelemente 5 bis 7 ist kleiner als die zum Eindrücken der Elemente in die Rastposition erforderliche Kraft. So ergibt sich eine stabile Verriegelung.

Fig. 4 zeigt eine Verschlussplatte 1 a, welche zur Abdeckung einer Öffnung in einer Seitenwand eines Verteilerschranks vorgesehen ist. Die Verschlussplatte 1 a weist Felder 4a zum Ausbrechen von Durchführungsöffnungen auf.

An einer Seite der Verschlussplatte 1 a sind Hakenelemente 21 gebildet, welche den Rand der genannten Öffnung übergreifen. Bei der Montage wird die eingesetzte Platte zur Verhakung seitlich verschoben. In dieser Position sind bügelförmige Rastelemente 8a und 8a' mit einem zur Platte parallelen Schenkel 13a, an dem ein kleiner Rastvorsprung 16a ausgebildet ist, noch nicht eingerastet. Zur abschließenden Befestigung und Verriegelung der Verschlussplatte 1 a werden die Rastelemente 8a und 8a' nach außen gedrückt, so dass der kleine Rastvorsprung 16a jeweils an einem entsprechenden, mit dem Verteilerschrank verbundenen Gegenelement einrastet. Die Betätigung der Rastelemente 5 bis 7 bzw. 8a und 8a' kann jeweils nur bei geöffnetem Schrank von der Schrankinnenseite her erfolgen.

## Patentansprüche

1. Vorrichtung zum Befestigen und Verriegeln einer Verschlussplatte (1) für eine Gehäuseöffnung, insbesondere eine Öffnung (10) in der Wand eines Zähleroder/und Verteilerschranks (11), mit Befestigungs- und Verriegelungselementen (5-7; 8a, 8a'), die zur Betätigung ausschließlich von der Gehäuseinnenseite her zugänglich sind,
**dadurch gekennzeichnet,**
**dass** die Befestigungs- und Verriegelungselemente wenigstens ein von der Verschlussplatte (1) in das Gehäuseinnere hinein vorstehendes Rastelement (5- 7; 8a,8a') zum Einrasten an einem mit dem Gehäuse verbundenen Gegenelement (18) umfassen, wobei in der Verschlussposition der Platte (1) das Rastelement (5-7;8a,8a') oder/und das Gegenelement in die Einraststellung elastisch abbiegbar ist/sind.

2. Vorrichtung nach Anspruch 1,
**dadurch gekennzeichnet,**
**dass** die zur Abbiegung des Rastelements (5-7;8a,8a') oder/und Gegenelements bis in die Einrastposition erforderliche Maximalkraft ein mehrfaches der elastischen Rückstellkraft des Rastelements (5-7;8a,8a') bzw. Gegenelements beträgt.

3. Vorrichtung nach Anspruch 1 oder 2,
**dadurch gekennzeichnet,**
**dass** das Rastelement (5-7) platten- oder streifenartig mit einer hakenförmigen Rastnase (12) an dem der Verschlussplatte (1) abgewandten Ende ausgebildet ist.

4. Vorrichtung nach einem der Ansprüche 1 bis 3,
**dadurch gekennzeichnet,**
**dass** das Hakenelement (5-7) bei der Einrastung auf Zug beansprucht wird.

5. Vorrichtung nach einem der Ansprüche 1 bis 4,
**dadurch gekennzeichnet,**
**dass** eine einrastende Nase (16a) des Rastelements (8a,8a')an einem sich parallel zur Platte (1a) erstreckenden Schenkel (13a) des Rastelements (8a,8a') gebildet ist.

6. Vorrichtung nach Anspruch 5,
**dadurch gekennzeichnet,**
**dass** der Schenkel (13a) relativ zum übrigen Rastelement (8a,8a') senkrecht zur Plattenebene verbiegbar ist.

7. Vorrichtung nach Anspruch 5 oder 6,
**dadurch gekennzeichnet,**
**dass** der Schenkel (13a) Bestandteil eines Bügels ist, dessen beide Enden mit der Verschlussplatte (1a) verbunden sind.

8. Vorrichtung nach einem der Ansprüche 1 bis 7,
**dadurch gekennzeichnet,**
**dass** weitere, bei Anordnung der Verschlussplatte (1) in der vorgesehenen Verschlussposition selbsttätig einrastende Befestigungs- und Verriegelungseinrichtungen (8) vorgesehen sind.

9. Vorrichtung nach Anspruch 8,
**dadurch gekennzeichnet,**
**dass** an einer Seite der Verschlussplatte (1) ein selbsttätig einrastendes Rastelement (8) und an den drei übrigen Seiten ein durch Abbiegung einzurastendes Rastelement (5-7) vorgesehen ist.

10. Vorrichtung nach einem der Ansprüche 1 bis 9,
**dadurch gekennzeichnet,**
**dass** die Verschlussplatte (1a) ferner den Rand der Gehäuseöffnung übergreifende Hakenelemente (21) aufweist, welche auf der dem Rastelement (8a,8a') gegenüberliegenden Plattenseite angeordnet sind.
